# EUROPEAN PATENT SPECIFICATION

(11) **EP 4 317 943 B1**
(45) Date of publication and mention of the grant of the patent: **21.10.2026**
(21) Application number: 23189375.1
(22) Date of filing: 03.08.2023
(51) Int. Cl.: G01N 21/25, G01N 21/05, G01N 21/31

(54) **OPTICAL ANALYTE SENSOR**
OPTISCHER ANALYTSENSOR
CAPTEUR OPTIQUE D'ANALYTE

(30) Priority: 04.08.2022 US 202217881088; 26.08.2022 LU 102997
(43) Date of publication of application: 07.02.2024
(73) Proprietor: Instrumentation Laboratory Company, Bedford, MA 01730 (US)
(72) Inventor: VO, Trong-Hoang, Bedford, 01730 (US); Balasubramanian, Shankar, Bedford, 01730 (US); Byers, Liam, Bedford, 01730 (US); Wang, Yu, Bedford, 01730 (US)
(74) Representative: Müller-Boré & Partner Patentanwälte PartG mbB

(56) References cited:
- EP-A1- 3 588 169
- EP-A1- 3 851 834
- US-A1- 2019 126 281
- US-B2- 11 231 409

## Description

### TECHNICAL FIELD

This specification relates to the detection of analytes in a substance (e.g., blood).

### BACKGROUND

Automated blood analyzers are devices that are commonly used for testing properties of blood samples.

EP 3 851 834 A1 describes an optical measurement unit for a scanning device, a scanning device and a method for operating a scanning device, for high throughput sample analysis of biological samples, wherein an illumination system is used to emit light of at least two different illumination wavelength ranges, and wherein an imaging system is used to detect light of at least two different detection wavelength ranges, in order to detect electromagnetic radiation within a field of view for determining the positioning of a sample within the field of view.

US 2019/126281 A1 describes a biological analysis system. The system comprises a sample block assembly. The sample block assembly comprises a sample block configured to accommodate a sample holder, the sample holder configured to receive a plurality of samples. The system also comprises a control system configured to cycle the plurality of samples through a series of temperatures. The system further comprises an automated tray comprising a slide assembly, the tray configured to reversibly slide the sample block assembly from a closed to an open position to allow user access to the plurality of sample holders.

US 11 231 409 B2 describes an apparatus for measuring hemolysis in a cartridge based automated blood analyzer. The apparatus allows hemolysis testing to be performed on a sample which is presented as a whole blood sample for other testing by the cartridge based automated blood analyzer. A disposable module is configured for optically analyzing one or more plasma analytes in a flow cell while red blood cells are acoustically separated from plasma in the flow cell.

EP 3 588 169 A1 describes a light-mixing system, which includes a light pipe having an input surface configured for receiving light from a light source, a light-mixing segment optically coupled to the input surface, and an output surface optically coupled to said light-mixing segment through which light exits the light pipe. A putative vector normal to at least one of the input or the output surface forms a non-zero angle relative to a longitudinal axis of the light-mixing segment.

### SUMMARY

The claimed invention is defined by a system for detecting analytes in a biochemical sample according to appended claim 1, and by a method for detecting analytes in a biochemical sample according to appended claim 12.

The technology described herein relates to optical systems for detecting analytes in a biochemical sample inside a container. For example, the optical systems can detect analytes in a plasma portion of a whole blood sample contained inside a microfluidic chamber. In some cases, the optical systems described herein can serve as test cartridges for automated blood analyzers. In some implementations, these test cartridges can be disposable.

Systems for detecting analytes in a biochemical sample can include an imaging module, a container configured to contain the biochemical sample (e.g., a flow cell), and an illumination module. The illumination module provides illumination to the biochemical sample (e.g., blood) in the container, and the imaging module can capture imagery of the illuminated sample. The captured imagery can then be processed and analyzed for detecting analytes within the substance. For example, such systems for detecting analytes in a substance can be used for detecting free hemoglobin (e.g., for hemolysis detection), lipids, enzymes, proteins, nucleic acids or other molecular components, and/or total bilirubin. One challenge of performing image-based analyte testing on a whole blood sample using an automated blood analyzer is the acquisition of high-quality and consistent imagery for analysis. Slight differences (e.g., manufacturing differences) between test cartridges such as the relative positioning of the blood sample pathway (e.g., within a flow cell) and a sensor device of the cartridge can result in inconsistent imagery across test cartridges. This can interfere with analysis of the acquired images, and may require more complex image processing algorithms to account for the inconsistencies. Inhomogeneous illumination of the blood sample pathway from different light sources can also hinder analyte testing by introducing unwanted analytical variations between images captured under different illumination settings. Therefore, it would be beneficial to ensure high-quality and consistent image acquisition of whole blood samples (e.g., across test cartridges and in different illumination settings) while minimizing the cost of disposable test cartridges.

In one aspect, a system for detecting analytes in a biochemical sample includes a container configured to contain the biochemical sample; a light source; an optical detector; a lens disposed between the container and the optical detector; an optical aperture disposed between the lens and the optical detector; and a structure configured to house the container, the optical aperture, the lens, and the optical detector.

Implementations can include the examples described below and herein elsewhere. In some implementations, the container can include a channel configured to hold the biochemical sample, the channel configured to pass at least a portion of light received from the light source to the optical detector. In some implementations, the system is configured to capture telecentric imagery. In some implementations, the optical aperture can be defined by a geometry of the structure. The optical aperture can for example be integrally formed by the structure. In some implementation, only the imaging module/imaging apparatus can include the optical aperture. That is, the illumination module may for example be absent of an optical aperture. In some implementations, the light source can include two or more LEDs of different colors. In some implementations, the system can include a light conduit that includes a non-linear optical path. In some implementations, the system further includes a light conduit that includes a non-linear optical path between the light source and the container. In some implementations, the light conduit and particularly the non-linear optical path of the light conduit can support total internal reflection. The light conduit can support total internal reflection of light received from the light source at a first end of the light conduit and can deliver reflected light to the container at a second end of the conduit. The light conduit can include a plastic light pipe or a glass light pipe.

In some implementations, the structure of the system is a single structure configured to house the container, the optical aperture, the lens, and the optical detector.

In some implementations, the optical detector may be configured to be received from a first receptacle of the structure, particularly of the single structure. In some implementations, a lens assembly, which particularly includes the lens, may be configured to be received from a second receptacle of the structure, particularly of the single structure. In some implementations, the optical aperture may be disposed between the first receptacle and the second receptacle of the structure, particularly of the single structure. The optical aperture may be formed by the structure, particularly of the single structure. In other words, the optical aperture may be a portion of the structure, particularly the single structure.

In some implementations, the container which is configured to contain the biochemical sample may be configured to be held or received from a third receptacle of the structure, particularly of the single structure.

In some implementations, the first receptacle, the second receptacle and/or the optical aperture may be portions of the structure, particularly of the single structure. Additionally or alternatively, the third receptacle may be a portion the structure, particularly of the single structure. The structure and particularly the single structure advantageously enhances the positioning accuracy of the members of the system for detecting analytes in the biochemical sample.

In another aspect, an imaging apparatus for an optical analyte detection system is featured. The imaging apparatus may herein also be referred to as an imaging module. The apparatus includes a first receptacle configured to receive an optical detector; a second receptacle configured to receive a lens assembly; and an optical aperture disposed between the first receptacle and the second receptacle, the optical aperture configured to pass light from the lens assembly on to the optical detector. The first receptacle, the second receptacle, and the optical aperture are portions of a single structure. In other words, the first receptacle, the second receptacle, and the optical aperture may be integrally formed portions of the single structure. The single structure is particularly configured to geometrically fix the first receptacle relative to the second receptacle. Alternatively or additionally, the single structure may be configured to geometrically fix the optical aperture relative to the first receptacle and/or relative to the second receptacle. In other words, the single structure may be integrally formed, for example injection molded, wherein the single structure integrally provides a fixed positioning of the first receptacle relative to the second receptacle, a fixed positioning of the aperture relative to the first receptacle, and/or a fixed positioning of the aperture relative to the second receptacle.

In some implementations of the system, particularly of the imaging apparatus, only one lens assembly may be disposed between the container and the optical detector. The lens assembly may particularly include the lens. In some implementations, only one optical aperture may be disposed, particularly in between the first receptacle and the second receptacle.

Implementations can include the examples described below and herein elsewhere. In some implementations, the imaging apparatus further includes a third receptacle configured to hold a container of a sample for the optical analyte detection system, wherein the third receptacle is a portion of the single structure. The third receptacle may be a portion integrally formed by the single structure. The single structure may particularly be configured to geometrically fix the third receptacle relative to the first receptacle, relative to the second receptacle, and/or relative to the optical aperture. Thus, the third receptacle may particularly provide for a fixed attachment (i.e. non-movable attachment) of the container, in particular relative to the imaging module and/or relative to the illumination module. In some implementations, the container can be a flow cell and the single structure can physically contact the flow cell without any intermediate components being disposed between the flow cell and the single structure. In some implementations, the container can include a flow cell and one or more intermediate components, and the single structure can physically contact the one or more intermediate components. In some implementations, the container can include a channel configured to hold the sample, and the container can be disposed such that the channel passes received light towards the second receptacle of the imaging apparatus. In some implementations, the sample can be a blood sample. In some implementations, the optical analyte detection system can be configured to capture telecentric imagery.

In another aspect, a method for detecting analytes in a biochemical sample is featured. The method includes illuminating a container holding the biochemical sample using light from two or more light-emitting diodes (LEDs), passing the light emanating from the container through a lens assembly towards an optical detector, and generating one or more images of the biochemical sample based on output of the optical detector. The light is directed from the LEDs to the container through a light pipe conduit, which may also be referred to as a light conduit, that includes a non-linear optical path supporting total internal reflection of light. The lens assembly is configured to converge the light emanating from the container through an aperture disposed between the lens assembly and the optical detector.

The light pipe conduit is a bent light pipe conduit. In other words, the light pipe conduit is a curved light pipe conduit. The bent or curved light pipe particularly allows for homogenizing the light, as well as unifying the light paths between multiple LEDs, which particularly emanate at different wavelengths. The light pipe may for example be bent in such a manner that an axis of a first opening (a first end) of the light pipe which faces the light source/the LEDs deviates from an axis of a second opening (a second end) facing the biochemical sample/the container containing the biochemical sample. The axis at the first end and the axis at the second end may for example deviate from one another in a range from about 10° to about 90°, particularly in a range from about 40° to about 90°, further particularly in a range of about 60° to about 90°, still further particularly about 90°, which respectively enhances homogenizing the light, as well as reducing chromatic differences between the LEDs which particularly emanate at different wavelengths.

Implementations can include the examples described below and herein elsewhere. In some implementations, illuminating the container can include illuminating the container using light of a first color emitted from a first subset of the two or more LEDs and subsequently illuminating the container using light of a second color emitted from a second subset of the two or more LEDs. In some implementations the method can further include separating the biochemical sample in the container. In some implementations, the method can further include delivering acoustic energy to the container prior to or during illuminating the container. In some implementations, the method can further include processing the one or more images to detect the analytes in the biochemical sample.

Various implementations of the technology described herein may provide one or more of the following advantages.

In some cases, the imaging module can include a telecentric imaging module. In particular, the telecentric imaging module can ensure that the container containing the biochemical sample (e.g., a flow cell containing a whole blood sample) has a constant or near constant magnification regardless of its distance from the imaging module and/or regardless of its location in the imaging module's field of view. Additionally, compared to a non-telecentric imaging module, the telecentric imaging module can allow for the illumination module to have a greater distance from the sample container while still providing a large illumination field. In some implementations, the imaging module can also have a small optical aperture (e.g., f/16 or smaller) to ensure that imagery of the container containing the biochemical 5 sample maintains constant or near constant focus within a large tolerable range of distance from a focal plane of the imaging module (e.g., about ±300µm to ±600µm (e.g., ±450µm) from a focal plane of the imaging module) and/or despite changes in the sample's location in the imaging module's field of view. This consistent focus can prevent analyte measurement errors induced by defocusing, which can range from >±5% to >±25% (e.g., >±15%), depending on factors such as sensor specifications, type of sample, type of analyte, etc. In general, the telecentric imaging module described herein is robust to imprecise manufacturing and assembly of the test cartridge and ensures image consistency across manufactured imaging modules, thereby improving the performance of sample analysis based on the captured images (e.g., for analyte detection). In some cases, the features of the imaging module and the container that most directly affect their relative positioning can be combined in a single structure. For example, the single structure can be an injection molded housing that contains location features for elements of both the imaging module (e.g., a lens, an aperture, or an optical detector) and the container. The location features may particularly be integrally formed with the single structure. Particularly, no single structure location features (such as those used to locate the lens, aperture, optical detector, and/or biochemical sample) are comprised of adjustable mechanisms, such as a threaded rod or knob, which may be used for adjusting the distance between the imaging module features (e.g., a lens, an aperture, or an optical detector) and/or the container. Thus, the system may particularly be absent of adjustment mechanisms such as threaded rods or knobs. This advantageously removes the need for any adjustments in order to detect analytes in the biochemical sample. This may also advantageously enhance the positioning accuracy of the members of the system for detecting analytes in the biochemical sample. In some implementations, the single structure with the constituent elements can together make up a disposable test cartridge for an automated blood analyzer. In some implementations, the disposable test cartridge can further include elements of the illumination module (e.g., a light source and a light conduit). The ability to injection mold the structure using thermoplastics can have the advantage of keeping the costs of disposable test cartridges low compared to other manufacturing techniques and materials. The single structure can include a single component that accurately defines and maintains the distance from the optical detector to the container, the lens, and the aperture of the imaging module. In some implementations, the systems described herein can provide the advantages of consistent distances among the image sensor, the container, the lens, and the aperture of the imaging module across disposable test cartridges, which in turn leads to predictable and consistent results that are substantially unaffected by variations in such distances. Combined with a small aperture telecentric imaging module, the single structure can enable the capture of images with consistent magnification and focus by different imaging modules, thereby improving the performance of sample analysis. In some cases, this improved consistency can obviate the need for performing calibration methods such as active camera alignment for each new disposable test cartridge, which may be costly and/or time-consuming.

In some cases, the illumination module of an optical system (e.g., an illumination module included within a test cartridge) can include a bent light pipe to diffuse light emitted from two or more LEDs of different colors (e.g., red LEDs, yellow LEDs, etc.) to illuminate the container and the biochemical sample it contains. The two or more LEDs may emit light at different wavelengths. Compared to other diffusors, a bent light pipe may have the advantages of delivering a more homogeneous illumination pattern to the container and reducing the chromatic differences between LEDs of different colors. The bent light pipe can thereby reduce analytical variations within a single image and between different color images, thereby improving performance of analyte detection compared to systems that utilize other kinds of light diffusors. The bent light pipe can also be made of low-cost materials such as thermoplastics (e.g., polycarbonate, acrylic [PMMA], cyclic olefin polymers, such as Zeonex or Zeonor, for example Zeonex 480 (product code Z03812 of Sept. 27, 2019), Zeonex 5000 (product code Z05213 of Oct. 2, 2019), or Zeonor 1060R (product code Z02812 of Sept. 27, 2019) polymethylmethyacrylimide [PMMI]), glass, or silicone resin. The bent light pipe can therefore be much more affordable than alternatives such as optical fibers. In some implementations, the affordability of the bent light pipe can enable the bent light pipe to be included with the LEDs, imaging module, the container, and the single structure as part of a single disposable test cartridge.

In some implementations, the illumination module may be absent of a mirror, an aperture, and/or lens assemblies, particularly in between the light source and the biochemical sample. In some implementations, the illumination module may be absent of telecentric elements.

Features and implementations as particularly mentioned with respect to the aspect of the system for detecting analytes in a biochemical sample, may accordingly apply to the aspect of the imaging apparatus for an optical analyte detection system, and vice versa. Features and implementations as particularly mentioned with respect to the aspect of the system for detecting analytes in a biochemical sample and the aspect of the imaging apparatus for an optical analyte detection system, may accordingly apply to the aspect of the method for detecting analytes in a biochemical sample, and vice versa.

The absence of particular features as for example mentioned above particularly provides for a simplified system for detecting analytes in the biochemical sample.

Other features and advantages of the description will become apparent from the following description, and from the claims. Unless otherwise defined, the technical and scientific terms used herein have the same meaning as commonly understood by one of ordinary skill in the art to which this invention belongs.

### BRIEF DESCRIPTION OF THE DRAWINGS

FIG. 1 is a diagram of a system for detecting analytes in a substance.
FIG. 2 is a diagram of an example image of separated blood plasma.
FIG. 3A shows a non-telecentric design for a system for detecting analytes in a substance.
FIGS. 3B-3C are images of a flow cell channel captured by the system depicted in FIG. 3A.
FIG. 4A shows a telecentric design for a system for detecting analytes in a substance.
FIGS. 4B-4C are images of a flow cell channel captured by the system depicted in FIG. 4A.
FIG. 5 shows a cross-section of a structure connecting a flow cell with an imaging module.
FIGS. 6A-6B show a cross-section of the structure depicted in FIG. 5 with molds for manufacturing the structure.
FIG. 7A shows an illumination system comprising a diffusor for illuminating a flow cell.
FIG. 7B shows the individual flow cell illumination patterns of two LEDs using the illumination system depicted in FIG. 7A.
FIG. 7C shows the variation of measured hemolysis across a captured image of a flow cell using the illumination system depicted in FIG. 7A.
FIG. 8A shows an illumination system comprising a bent light pipe for illuminating a flow cell.
FIG. 8B shows the individual flow cell illumination patterns of two LEDs using the illumination system depicted in FIG. 8A.
FIG. 8C shows the variation of measured hemolysis across a captured image of a flow cell using the illumination system depicted in FIG. 8A.
FIG. 9 is a flowchart of a process for detecting analytes in a substance.

### DETAILED DESCRIPTION

Analysis of biochemical samples, including detecting analytes in biochemical samples (e.g., blood, urine, saliva, etc.), is important for many areas of health diagnostics and research. For example, analysis of blood samples can reveal valuable information about the health condition of living beings such as humans or animals. Automated blood analyzers are systems that are commonly used for testing and measuring numerous properties of whole blood samples including pH, pCO2, pO2, Na+, K+, Cl-, Ca++, glucose, lactate, haematocrit, total bilirubin and CO-Oximetry (tHb, O2Hb, COHb, MetHb, HHb). Many automated blood analyzers accept disposable test cartridges which may include one or more blood sample pathways, sensor devices, storage packages for storing appropriate reagents, or chambers and fluid pathways for containing reagents and mixtures.

An example of an automated blood analyzer is the GEM Premier 5000 system manufactured by Werfen (formerly Instrumentation Laboratories) of Bedford, Mass., USA. Other examples of automated blood analyzers include the ABL 90 flex plus by Radiometer Medical ApS, the Rapid Point by Siemens Healthineers, the iStat blood gas analyzer by Abbott Point of Care, and the cobas blood gas system by Roche Diagnostics.

In some cases, it is desirable for automated blood analyzers to have the capability to test for additional properties of blood samples including taking measurements of additional analytes and/or identifying additional blood-related conditions. Such analytes can include free hemoglobin, enzymes, proteins, lipids, bilirubin, nucleic acids or other molecular components etc. In particular, it would be desirable to add such capability without affecting the existing measurements of other analytes.

Some types of analyte testing (e.g., hemolysis detection) have historically been measured by analyzing blood plasma which has been separated from a whole blood sample by centrifugation, for example. However, more recent technologies have been developed to enable image-based analyte testing on a sample which is presented as a whole blood sample for other testing by a cartridge-based automated blood analyzer. For example, techniques for spatial separation of particles in a solution for biomedical sensing and detection are described in U.S. Patent Publication 2018/0052147 A1, and examples of disposable hemolysis sensors for use in cartridge-based automated blood analyzers are described in U.S. Patent No. 11,231,409 B2 .

The technology described herein relates to an innovative optical system for detecting analytes in a biochemical sample inside a container. For example, the optical system can detect analytes in a plasma portion of a whole blood sample contained inside a microfluidic chamber (e.g., to measure free hemoglobin, enzymes, proteins, lipids, total bilirubin, etc.). While measurement of hemolysis, lipids, and total bilirubin from whole blood samples are provided as examples, the advantages of the present invention are more widely applicable to the sensing of various analytes in a wide range of biochemical samples.

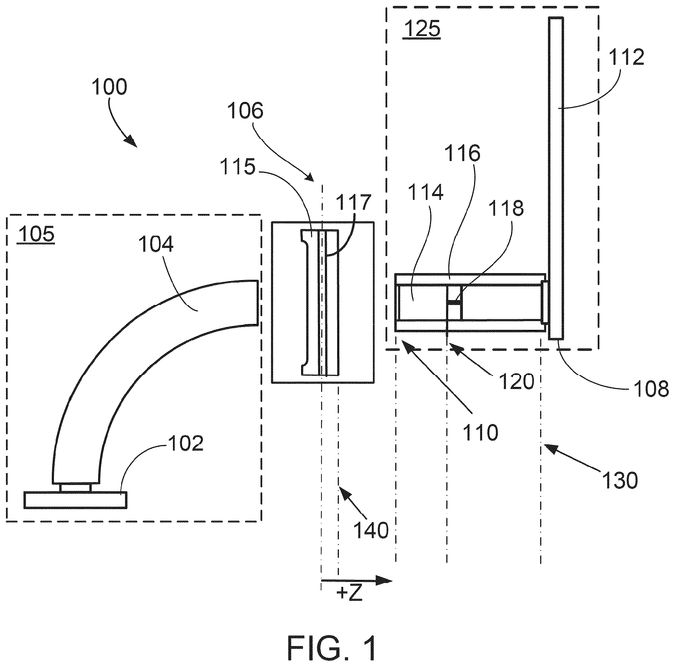

FIG. 1 illustrates an exemplary optical system 100 for detecting analytes in a substance (e.g., a biochemical sample), in accordance with the present invention. The system 100 includes an illumination module 105, a container 115, and an imaging module 125.

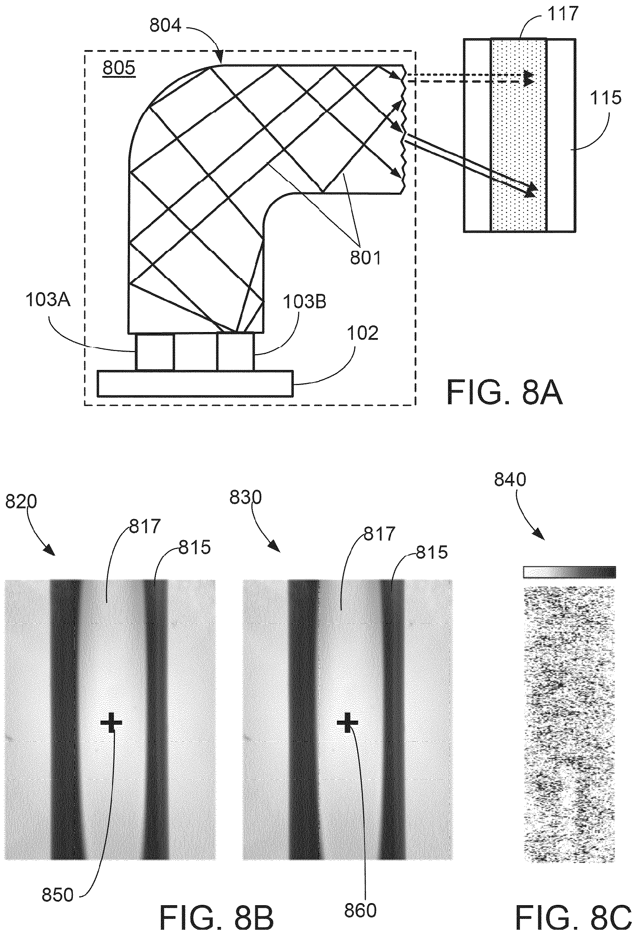

The illumination module 105 includes a base 102. In some implementations, the base 102 can include a printed circuit board. Mounted on the base 102 are two or more light sources (e.g., LEDs 103A, 103B as shown in FIG. 8A). In some implementations, the two or more light sources can be two or more LEDs of different colors. For example, the two or more light sources can include one or more red LEDs 103A and one or more yellow LEDs 103B (shown in FIG. 8A).

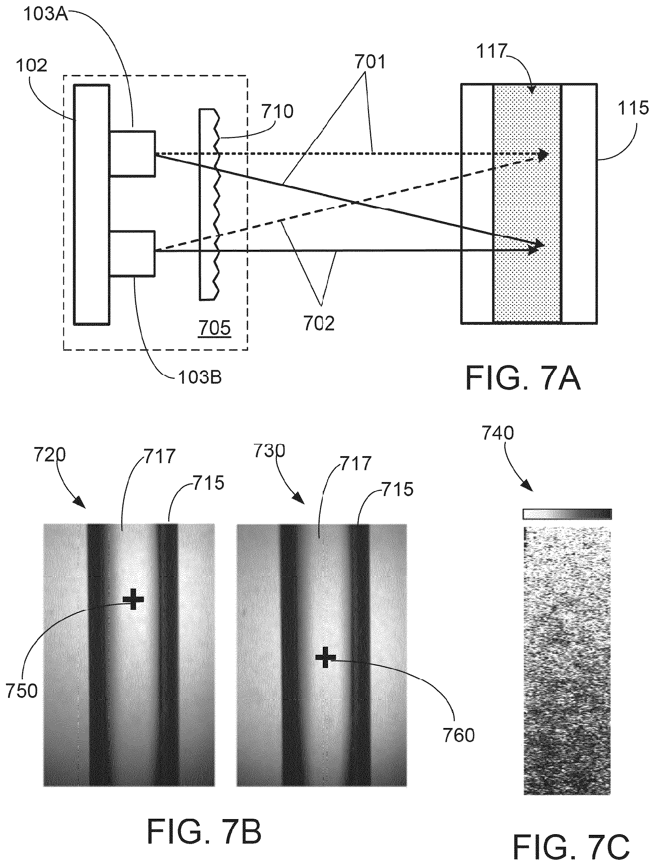

The illumination module also includes a light conduit 104 that includes a non-linear optical path between the two or more LEDs 103A, 103B and the container 115. The light conduit 104 supports total internal reflection of light, so that light emitted from the multiple LEDs 103A, 103B is reflected many times inside the light conduit 104 before illuminating the container 115. In some implementations, the light conduit 104 can be a bent light pipe and can be made of low-cost materials such as thermoplastics (e.g., polycarbonate, acrylic [PMMA], cyclic olefin polymers, such as Zeonex or Zeonor, for example Zeonex 480 (product code Z03812 of Sept. 27, 2019), Zeonex 5000 (product code Z05213 of Oct. 2, 2019), or Zeonor 1060R (product code Z02812 of Sept. 27, 2019), polymethylmethyacrylimide [PMMI]), glass, or silicone resin. The bent light pipe can be much more affordable than alternative light conduits such as optical fibers and can lower the cost of the overall optical system 100. In some implementations, the affordability of the light conduit 104 can enable the full optical system 100 to be manufactured, packaged, sold, and/or shipped together as part of a single disposable test cartridge (e.g., including the illumination module 105, the container 115, the imaging module 125, and a single structure housing these modules). In other implementations, a single disposable test cartridge may only comprise a portion of the full optical system 100. Additional details about the light conduit 104 and its advantages are described herein with relation to FIGS. 7A-7C and FIGS. 8A-8C.

Light from the illumination module 105 exits the light conduit 104 and illuminates the container 115. The container 115 is configured to contain a biochemical sample such as blood. For example, the container 115 can be a flow cell (e.g., a microfluidic flow cell) including a channel 117 configured to hold the sample. In some implementations, the container 115 can be a flow cell by itself, while in other implementations, the container 115 can include one or more additional components connected to the flow cell (e.g., frame(s) or mounting components). When the optical system 100 is in operation, light from the illumination module 105 passes through the container 115, illuminating the sample inside the channel 117. The light that passes through the container 115 is received by the imaging module 125.

The imaging module 125 is configured to receive light that passes through the channel 117 of the container 115, detect the light with an optical detector 108, and generate one or more images of any sample (e.g., blood) contained within the channel 117 based on the output of the optical detector 108. The imaging module 125 includes a lens 114, optical aperture 118, and optical detector 108, although additional components, e.g., additional lenses, can be included.

The lens 114 is a telecentric lens. For example, the lens 114 can have its entrance pupil positioned at infinity (e.g., in a direction towards the container 115). On the opposite side of the lens 114 (e.g., between the lens 114 and the optical detector 108), the optical aperture 118 is disposed at a focal point of the lens 114. In this configuration, the imaging module 125 can be capable of capturing telecentric imagery and can be considered a "telecentric imaging system" or"telecentric imaging module." Although not shown in FIG. 1, in some implementations, a telecentric imaging system can also be achieved using telecentric illumination (e.g., collimated light emitted by the illumination module 105) to illuminate the container 115.

In some implementations, the lens 114 is part of a lens assembly including multiple lenses. For example, when multiple LEDs (e.g., LEDs 103A, 103B shown in FIG. 8A) are used and they have different wavelengths, a lens assembly including a single lens (e.g., lens 114) can create different focal planes and out-of-focus images for some of the LEDs. These chromatic aberrations can be improved by using multiple-lenses. A lens assembly including multiple lenses can also reduce monochromatic aberrations (such as spherical aberration, where the center of an image is more in focus than the corners).

Light received by the imaging module 125 travels through the lens 114 and is passed on, through the optical aperture 118, to the optical:detector 108. The optical detector 108 can be a camera, a charge-coupled device detector, or other optical sensor. The optical detector 108 is configured to generate an output (e.g., imagery) based on detected light. In some implementations, the optical detector can be mounted on a base such as a printed circuit board 112, which may be included in the imaging module 125. The printed circuit board 112 can include one or more controllers to control the optical detector 108 to capture imagery. In some implementations, the printed circuit board 112 can include one or more processors to process the captured imagery (e.g., to detect analytes in a biochemical sample held within the container 115). In some implementations, signals indicative of the captured imagery can be sent to one or more remote devices for processing.

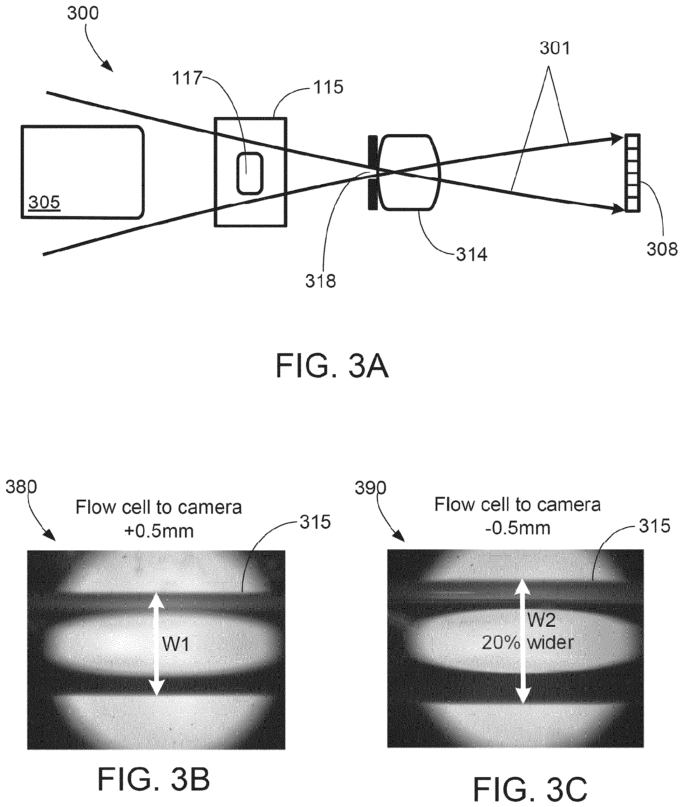

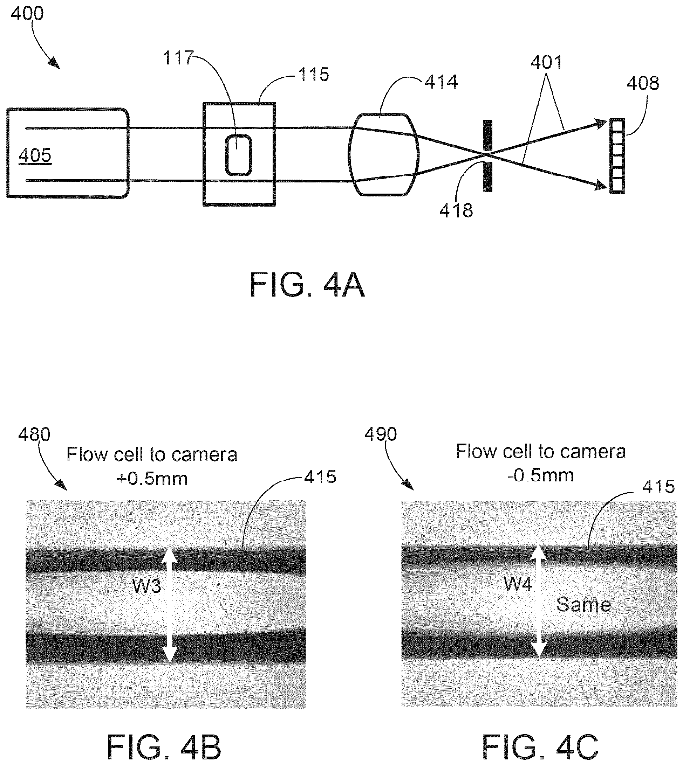

A telecentric imaging module such as the imaging module 125 can ensure that the container 115 containing a biochemical sample has a constant (or near constant) magnification despite changes in distance from container 115 to the imaging module 125 and/or regardless of its location in the imaging module's field of view. The telecentric imaging module can also have a small aperture (f/16 or smaller) to ensure that the container 115 maintains constant (or near
constant) focus within a large tolerable range of distance from the imaging module 125 (e.g., about ±300µm to ±600µm (e.g., +450µm) from a focal plane of the imaging module) and/or despite changes in the container's location in the imaging module's field of view. This consistent focus can prevent analyte measurement errors induced by defocusing, which can range from >±5% to >±25% (e.g., >±15%), depending on factors such as sensor specifications, type of sample, type of analyte, etc. Since the location of focal plane itself can vary up to approximately ±200 µm to ±400 µm (e.g., ±300 µm) from its intended position, in some cases, the tolerable distance between the container 115 and the stop of the lens 120 can be as much as ±50 µm to ±250 µm (e.g., ±150 µm) without substantially impacting analysis quality due to changes in magnification or focus. Thus, consistent sample analysis across test cartridges having slight manufacturing differences can be achieved, as long as those differences are within a threshold, e.g., within a ±50 µm to ±250 µm (e.g., ±150 µm) limit. In this manner, the imaging module 125 described herein can ensure improved consistency and precision of sample analyses compared to what can be achieved using conventional test cartridges for automated blood analyzers. Additional details about the telecentric imaging module 125 and its advantages are described herein with relation to FIGS. 3A-3C and FIGS. 4A-4C.

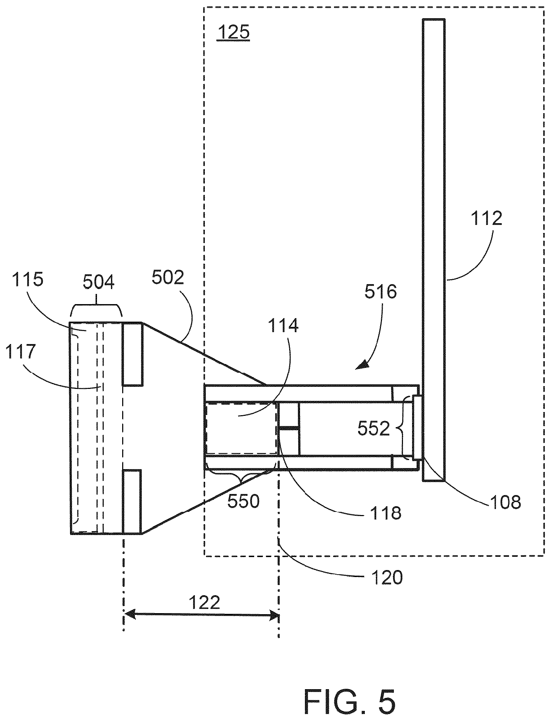

As shown in FIG. 1, the lens 114, the optical aperture 118, and the optical detector 108 are housed within a single structure 116. As described below (e.g., with respect to FIG. 5), in some implementations, the single structure can further house the container 115. The structure 116 is referred to as a "single structure" because various components within the structure are substantially fixed in location and orientation relative to each other. The structure 116 can define the distances between the lens 114, the optical aperture 118, and the optical detector 108, housing each component such that they are not movable relative to one another. For example, the structure 116 can include location features such as a first receptacle configured to receive a lens assembly (e.g., a single lens 114 or multiple lenses) and a second receptacle configured to receive the optical detector 108. The structure 116 can further be configured so that the optical aperture 118 is integrated into or is part of the structure 116. For example, the structure 116 can be a single component (e.g., an injection molded component) with a built-in optical aperture 118 between the first receptacle and the second receptacle, the optical aperture being defined by a geometry of the structure 116. Example distances between the optical detector 108 and aperture 118 can be about 3-10 mm or 5-8 mm, e.g., about 6mm. Example distances between the optical detector 108 and the lens 114 can be about 5-15 mm or 8-12 mm, e.g., about 10 mm. A tolerance range for each of these distances can be about ±0.10 mm or lower, e.g., ±0.05 mm or lower. The distances and tolerance ranges are merely examples for one possible implementation of the systems and methods described herein. By no means are the systems and methods limited by such distances or tolerances. Other implementations can be readily used.

Referring to FIG. 5, an structure 516 is illustrated, which expands upon the structure 116 (shown in FIG. 1) to show an implementation that houses the container 115. The structure 516 serves to define the distances between the container 115 and components of the imaging module 125 (e.g., the lens 114, the optical aperture 118, and the optical detector 108), such that the components are substantially fixed relative to one another. For example, the structure 516 can include a third receptacle configured to receive the container 115. In some implementations, the container 115 can be a microfluidic flow cell, and the structure 516 can come in direct physical contact with the flow cell without the need for any intermediate components disposed between the flow cell and the structure 516. In other implementations, the container 115 can include one or more additional components connected to the flow cell (e.g., frame(s) or mounting components) with which the structure 516 may come into contact.

With respect to structure 516, the dimension 122 defines the distance from the optical aperture 118 (and lens stop 120) to the container 115. In some cases, dimension 122 can be between 5 mm and 15 mm or between 8 mm and 11 mm (e.g., about 9 mm). In some implementations, the dimension 122 can be well controlled by traditional injection molding that can be used for high volume disposables. For example, traditional injection molding techniques can yield an approximate dimensional tolerance range of about ±0.01 mm to ±0.10mm or ±0.05mm to ±0.08mm (e.g., about ±0.06mm), which is well within the tolerable focus and magnification window of approximately ±150µm as described above. Example distances between the optical detector 108 and container 115 can be about 10-25 mm or about 15-20 mm, e.g., about 19mm, with a tolerance range of about ±0.02 mm to about ±0.10 mm, e.g., about ±0.05mm. These distances and tolerance ranges are merely examples for one possible implementation of the systems and methods described herein. By no means are the systems and methods limited by such distances or tolerances. Other implementations can be readily used.

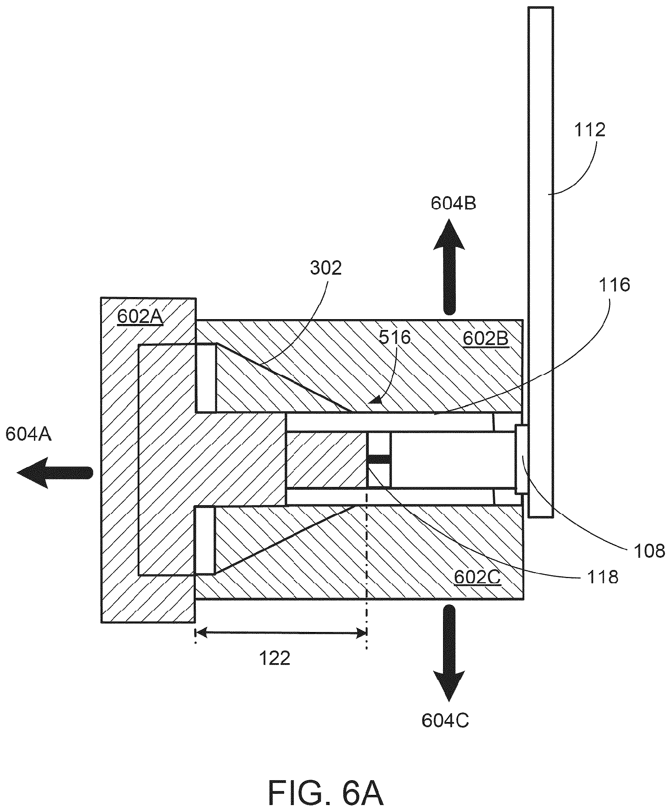

Having well-defined and reproducible distances (with errors that are delimited to be within acceptable thresholds) among the container 115, the lens 114, the optical aperture 118, and the optical detector 108 can be beneficial for capturing consistent imagery of a biochemical sample, which in turn can ensure consistent performance of analyte detection (e.g., by reducing defocus-induced analyte measurement error by more than ±5% to ±25% (e.g., ±15%)). For example, in reference to the +Z dimension shown in FIG. 1, it can be beneficial to ensure that the distances between a flow cell channel axis 106, an outer surface 140 of the container 115, an end 110 of an objective of the imaging module 125, a stop 120 of the lens 114, and a proximal end 130 of the optical detector 108 are consistent between manufactured units. A single structure (e.g., structure 116 or structure 516) that defines the locations of the container 115, the lens 114, the optical aperture 108, and/or the optical detector 108 can therefore have the advantage of enabling consistent imagery even when manufactured using lower cost, lower precision manufacturing methods such as injection molding. Additional details about the structure 516, how it can be manufactured, and its resulting advantages are described herein with relation to FIGS. 5 and FIGS. 6A-6B.

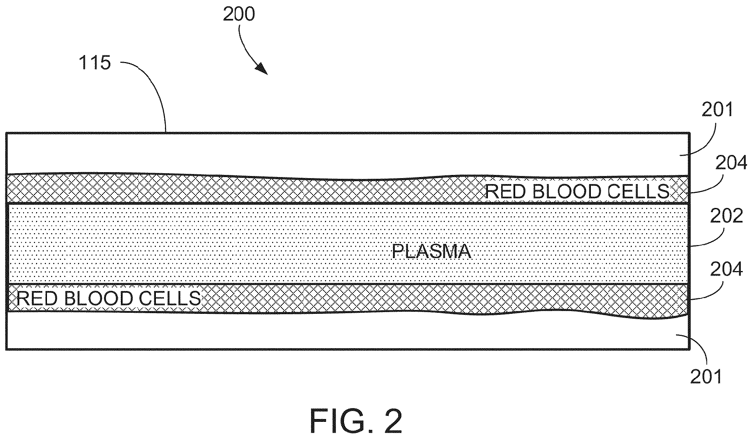

As described previously, the optical system 100 can be used to measure analytes such as free hemoglobin, enzymes, proteins, lipids, bilirubin, nucleic acids or other molecular components etc. FIG. 2 illustrates a schematic representation of an example image 200 that might be acquired when using the optical system 100 on a blood sample contained within a container 115 (e.g., a flow cell). In the schematic representation 200, plasma 202 has been separated from red blood cells 204 by forces applied to the container 115. For example, this separation can be achieved by acoustic forces from an acoustic transducer. In some implementations, the plasma 202 can be extracted and tested on its own to measure analytes. However, in some implementations, this separation of the blood sample can allow clear plasma to be interrogated optically (e.g., imaged) directly in the container 115 to determine levels of various analytes such as free hemoglobin, enzymes, proteins, lipids, bilirubin, nucleic acids or other molecular components etc. In the example of FIG. 2, the regions 201 represent glass areas of the container (e.g., a flow cell). Inclusion of such glass areas 201 within the imaged portions can allow for correcting for LED brightness variations. In some implementations, the flow channel location variations may also be accounted for. For example, in some cases, due to manufacturing variations, flow channels from different modules can shift up/down by up to ±0.3 mm. Allowing a glass area 201 in the image allows for accounting for such variations and substantially eliminates the risk of a portion of the flow channel being omitted from the image. In some implementations, the flow channel width (delimited by the two regions 204 of the red blood cells in the example of FIG. 2) can be between 400-2000 µm (e.g., 820 µm, 1000 µm, 1500 µm, etc.) and the width of the plasma region 202 can be between 40 and 300 µm. The width of the plasma region can depend on the width of the flow channel. Once again, the distances provided are merely examples for possible implementations of the systems and methods described herein. They are not intended to be limiting, and other implementations can be readily used.

The image illustrated in the schematic representation 200 can be acquired by illuminating the plasma with a multicolored light source..For example, yellow and red LEDs (e.g., LEDs 103A, 103B) emitting light with wavelengths in a range of 520nm - 600nm (e.g., 570nm) and a range of 600nm - 1000 nm (e.g., 610 nm) respectively, can be used to measure analyte(s) in the plasma 202. Use of LEDs with these wavelengths can avoid the effects of possible interferences in the plasma 202. For example, using hemolysis measurements as an example, yellow LEDs can be used to measure hemolysis, while red LEDs can be used to measure lipids. Then the images can be jointly used to subtract out lipid interference from the hemolysis signals. In some implementations (e.g., for total bilirubin measurements), additional LEDs ranging from 400nm - 500nm in wavelength (e.g., 460nm) can also be used. Additional details about the exemplary use of optical systems for analyte measurements are described in U.S. Patent No. 11,231,409 B2.

Referring now to FIGS. 3A-3C, we describe how previously existing non-telecentric optical systems would capture imagery of the container 115. FIG. 3A shows an exemplary non-telecentric design for an optical system 300 for detecting analytes in a substance (e.g., a biochemical sample). The non-telecentric optical system 300 includes illumination optics 305, a container 115 (e.g., a flow cell) including a flow channel 117, an optical aperture 318, a lens 314, and a camera 308. Light 301 is emitted from the illumination optics 305, passes through the container 115 and the flow channel 117, through the optical aperture 318, and through the lens 314, to the camera 308.

The optical system 300 is non-telecentric and has a large angle of view, capturing light from an increasingly wide area as distance increases from the camera 308. As a result, the non-telecentric optical system 300 is highly sensitive to small displacements of the container 115 either towards or away from the camera 308, with small displacements leading to substantial changes in image magnification, as described in more detail herein. Substantial changes in magnification between images captured by different test cartridges can in turn create a need for more complex image processing algorithms to account for these changes.

FIG. 3B shows an image 380 of a container 315 captured by the camera 308 after moving the container 315 0.5mm away from the focal plane (further from camera 308). FIG. 3C shows an image 390 of the same container 315 captured by the camera 308 after moving the container 315 0.5mm away from the focal plane (closer to camera 308). The width W2 of the imaged flow channel within imaged container 315 in FIG. 3C is 20% greater than the width W1 of the imaged flow channel within imaged container 315 in FIG. 3B. These results demonstrate how, in existing non-telecentric optical systems such as optical system 300, small differences in distances from the container 115 to the camera 308 can negatively impact magnification consistency for images captured by different test cartridges, and thereby complicate processing (e.g., for analyte testing). In some implementations, the displacement of the container 315 can be less than or greater than 0.5mm away from the focal plane. For example, the displacement may range from 300µm to 600µm. Similarly, the difference between width W1 and width W2 may be less than or greater than 20%. For example, the difference may range from 5% to 25%. These distances and percent changes in size are provided merely as examples for possible implementations of the systems and methods described herein. They are not intended to be limiting, and other implementations can be readily used.

Referring to FIGS. 4A-4C, we now describe how a telecentric optical system such as the optical system 100 (shown in FIG. 1) captures imagery of the container 115 and solves some of the problems identified with non-telecentric optical systems (e.g., system 300 shown in FIG. 3A). FIG. 4A shows an exemplary telecentric optical system 400 for detecting analytes in a substance (e.g., a biochemical sample). The telecentric optical system 400 includes illumination optics 405, a container 115 including a flow channel 117, a lens 414, an optical aperture 418, and a camera 408. In this implementation, the optical aperture 418 is positioned between the lens 414 and the camera 408, at the focal point of the lens 414. Light 401 is emitted from the illumination optics 405, passes through the flow channel 117, through the lens 414, and through the optical aperture 418 to the camera 408.

Unlike the optical system 300 shown in FIG. 3A, the optical system 400 captures light from a substantially constant area irrespective of the distance from the camera 408. Consequently, the telecentric optical system 400 is much more robust to small displacements of the container 115 either towards or away from the camera 408. FIG. 4B shows an image 480 of a container 415 captured by the camera 408 after moving the container 415 0.5mm away from the focal plane (further from camera 408). FIG. 4C shows an image 490 of the container 415 captured by the camera 408 after moving the container 415 0.5mm away from the focal plane (closer to the camera 408). Unlike in the images 380, 390 captured by the non-telecentric system 300, in the images 480, 490 captured by the telecentric system 400, the width W4 of the imaged flow channel within imaged container 415 in FIG. 4C is substantially the same as the width W3 of the imaged flow channel within imaged container 415 in FIG. 4B. These results demonstrate how telecentric optical systems (e.g., optical system 100 or optical system 400) can be advantageous compared to non-telecentric optical systems (e.g., optical system 300). Increased robustness to small changes in distances between the container 115 and the camera 408 enables greater magnification consistency between images captured by different optical systems (e.g., disposable test cartridges). This greater uniformity can enable better performance of image-processing algorithms for applications such as analyte testing.

Referring now to FIG. 5, we describe a structure 516 that connects the container 115 with the imaging module 125 and discuss the advantages associated with the structure 516. Structure 516 is an expanded version of the structure 116 (shown in FIG. 1) and includes many substantially similar features. Like the structure 116, the structure 516 is a single monolithic component or "single structure." Like the structure 116, the structure 516 also defines the distances between the lens 114, the optical aperture 118, and the optical detector 108. For example, the structure 116 can include location features such as a first receptacle 550 configured to receive a lens assembly (e.g., a single lens 114 or multiple lenses) and a second receptacle 552 configured to receive the optical detector 108. The structure 516 can further be configured so that the optical aperture 118 is integrated into or is part of the structure 516. For example, the structure 516 can be a single injection-molded component with a built-in optical aperture 118 between the first receptacle and the second receptacle. In some implementations, the structure 516 can be configured so that it is in direct contact with the lens 114, the optical aperture 118, and/or the optical detector 108. This can prevent variations in distances between the lens 114, the optical aperture 118, and/or the optical detector 108 caused by the inclusion of additional components. In other implementations, the lens 114, the optical aperture 118, and/or the optical detector 108, can include one or more additional components connected to the flow cell (e.g., frame(s) or mounting components) which the structure 516 may contact. Example distances between the lens 114, the optical aperture 118, and the optical detector 108 are described above in relation to FIG. 1.

Unlike the structure 116 shown in FIG. 1, the structure 516 further includes a third receptacle 504 configured to receive the container 115. In some implementations, the structure 516 can be configured so that it is in direct contact with a flow cell of the container 115 without the inclusion of additional frames or mounting components. In other implementations, the container 115 can include the flow cell and one or more intermediate components (e.g., frames or mounting components) with which the structure 516 may come into contact. In such implementations, the structure 516 can physically contact these intermediate components without being in direct contact with the flow cell itself.

In some implementations, the third receptacle 504 is connected with the first receptacle, the second receptacle, and the optical aperture via a connecting portion 502, each of the first, second, and third receptacles and the connecting portion 502 being parts of the single structure 516. While the connecting portion 502 is shown as having a tapered cross-section, various other geometries are possible and would be readily recognized by one of ordinary skill in the art. By including the third receptacle 504 within the single structure 516, the structure 516 not only defines the distances between the components of the imaging module 125 (e.g., the lens 114, the optical aperture 118, and the optical detector 108), but also defines the distances between the container 115 and the components of the imaging module 125. For example, the structure 516 defines the assembly dimension 122, representing the distance between an outer surface of the container 115 and a mechanical stop for the telecentric lens 114 (also the start of the optical aperture 118). As described previously, example distances 122 can be between 5 mm and 15 mm or between 8 mm and 11 mm (e.g., about 9 mm), and the single structure 516 can be designed such that the dimension 122 is reproducible within a dimensional tolerance range of about ±0.02mm to about ±0.10mm (e.g., about ±0.06mm). By placing the container 115 that contains the sample in the third receptacle 504, the distance between the sample and the optical aperture 118 can be accurately determined with an error limit ranging from about 0.02mm to about 0.10mm (e.g., about 0.06mm), the error limit corresponding to the manufacturing tolerances of the process used to manufacture the single structure 516 (e.g., injection molding). Human-introduced error from manually aligning the components can therefore be minimized and optical imaging of the sample can be performed and analyzed with known accurate parameters, including the distances between the sample and the optical aperture 118, lens 114, and detector 108. In this manner, consistent sample imagery can be obtained across multiple optical systems or test cartridges even in the presence of dimensional differences that may arise during the manufacturing process. As described above, the distances and tolerance ranges provided are merely examples for possible implementations of the systems and methods described herein. They are not intended to be limiting, and other implementations can be readily used.

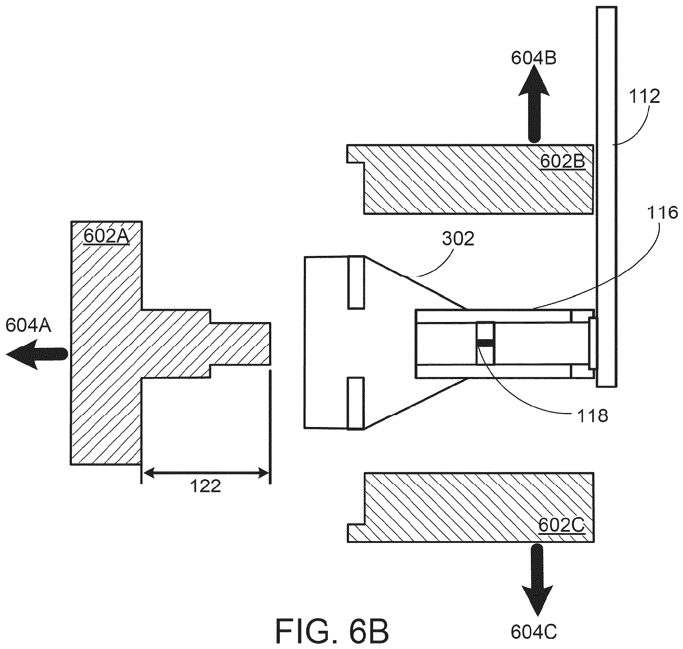

Similar to structure 116 (shown in FIG. 1), the structure 516 can be manufactured as a single injection-molded component. Referring to FIGS. 6A-6B, we now describe a possible injection molding manufacturing process for the structure 516. FIG. 6A shows the structure 516 depicted with mold components 602A, 602B, 602C (collectively referred to herein as molds 602) for manufacturing the structure 516 in a closed configuration. FIG. 6B shows the removal of the molds 602 after thermoplastic material has been injected and cooled. As shown in these figures, the geometry of the mold components 602A, 602B, 602C enables easy removal by separating them in the directions indicated by arrows 604A, 604B, and 604C respectively.

Implementing an injection molding process can enable many copies of the structure 516 to be manufactured at high volume and low cost. Importantly, the assembly dimension 122, representing the distance between an outer surface of the container 115 and a mechanical stop for the lens 114 (also the start of the optical aperture 118), is entirely defined by a single mold component 602A. Thus, even after accounting for inconsistencies in the injection molding process (e.g., dimensional tolerances ranging from about ±0.01mm to about ±0.10mm), in some implementations, the sample container 115 can still reliably be positioned within about ±150 µm of its intended location with respect to the lens 114, aperture 118, and optical detector 108.

Combining the single structure 516 with a telecentric imaging system, such as those described in relation to FIG. 1 and FIGS. 4A-4C, the inconsistencies associated with common manufacturing techniques such as injection molding can be tolerated while still producing reliable results due to reduced focus variation across images captured by separate imaging modules (e.g., imaging module 125). The ability to injection mold the structure 516 using thermoplastics can also have the advantage of keeping the costs of test cartridges low compared to other manufacturing techniques and materials, which can be especially important in contexts where test cartridges are used in a disposable manner.

Referring now to FIGS. 7A-7C, we describe how illumination modules that use traditional diffusors affect the delivery of light from sources (e.g., multiple LEDs) of different colors to the container 115. FIG. 7A shows an illumination module 705 that includes a base 102 with a first LED light source 103A (here, a red LED light source) and a second LED light source 103B (here, a yellow LED light source) mounted on it. The illumination module 705 further includes a traditional diffusor 710 that diffuses the light from the LEDs 103A, 103B prior to the light arriving at the channel 117 of the container 115. The lines 701 represent light rays originating from the red LED light source 103A, and the lines 702 represent light rays originating from the yellow LED light source 103B.

In the setting of analyte measurement, a first image of the container 115 is typically captured after illuminating it with light of a first color (e.g., red light from the LED source 103A). A second image of the container 115 is subsequently captured after illuminating it with light of a second color (e.g., yellow light from the LED source 103B). Analytes can be measured based on a joint analysis of the first image and the second image of the container 115.

For reliable analyte measurements, it is important to achieve substantially similar illumination patterns of the channel 117 across both the first and the second images. For example, the brightness pattern of the first and second images can be substantially similar irrespective of the physical position of the light sources 103A, 103B. This makes the images directly comparable and can mitigate the need for complex processing algorithms that actively account for differences in the underlying illumination pattern between images. While the examples described herein demonstrate the use of two LED light sources, in some applications, analyte detection can include additional light sources of various wavelengths (e.g., three light sources, four light sources, seven light sources, etc.)

FIG. 7B shows a first image 720 of an empty container 715, as illuminated by a red LED 103A of the illumination module 705. FIG. 7B also shows a second image 730 of the empty container 715, as illuminated by a yellow LED 103B of the illumination module 705. Comparing the first image 720 and the second image 730, it is apparent that the multiple LEDs 103A, 103B yield different illumination patterns (e.g., brightness patterns) across the imaged channel 717 of the container 715. For example, the brightest spot 750 in the image 720 is located higher than the brightest spot 760 in the image 730. This can be caused, for example, by the higher physical location of the LED light source 103A on the base 102 compared to the LED light source 103B. Moreover, FIG. 7C shows a heatmap 740 indicative of the differences in the illumination patterns between the images 720, 730 across the imaged channel 717, revealing substantial differences in the brightness of the images at different locations of the heatmap 740. This substantial variation in illumination patterns between the LEDs 103A, 103B across the imaged channel 117 can negatively impact analyte measurements. For example, analyte measurements can be obtained using both the images 720 and 730, but if the images 720, 730 have different illumination patterns, then comparison of their intensities for analyte measurements may produce results that are artificially high or low in different regions of the imaged channel 717.

Referring to FIGS. 8A-8C, we now describe how illumination modules that use a bent light pipe as a light conduit (e.g., light conduit 104 in optical system 100) collect and deliver light from sources (e.g., multiple LEDs) of different colors to the container 115, and how such illumination modules can be advantageous compared to those using traditional diffusors. FIG. 8A shows an illumination module 805 that is substantially similar to the illumination module 105 shown in FIG. 1. FIG. 8A includes a base 102 with a red LED light source 103A and a yellow LED light source 103B mounted on it. The illumination module 805 further includes a bent light pipe 804 that collects the light from the LEDs 103A, 103B and delivers the collected light along a non-linear optical pathway to the container 115. As shown in FIG. 8A, when the yellow LED 103B is illuminated, the bent light pipe 804 collects the emitted light. The light is internally reflected many times via total internal reflection inside the bent light pipe 804, as demonstrated by light pathway lines 801. Consequently, upon exiting the bent light pipe 804 and illuminating the container 115, the light is total-internally reflected several times and provides substantially homogenous illumination of the channel 117. When the red LED 103A is illuminated, the emitted light is collected by the same bent light pipe 804, and similarly reflects and delivers the light to illuminate the channel 117. As such, because the light is total internally reflected multiple times within the bent light pipe 804, the channel 117 is illuminated substantially similarly by different light sources regardless of the location of the corresponding light source with respect to the channel 117. Specifically, the use of the bent light pipe 804 can potentially avoid situations where one region of the channel 117 is illuminated with a higher brightness than another region (e.g., as illustrated with reference to FIGS. 7A-7C). While the examples described herein demonstrate the use of two LED light sources, in some applications, analyte detection can include additional light sources of various wavelengths (e.g., three light sources, four light sources, seven light sources, etc.).

FIG. 8B shows a first image 820 of an empty container 815, as illuminated by the red LED 103A of the illumination module 805. FIG. 8B also shows a second image 830 of the empty container 815, as illuminated by the yellow LED 103B of the illumination module 805. Comparing the first image 820 and the second image 830, the multiple LEDs 103A, 103B have substantially similar illumination patterns across the imaged channel 817 of the container 815. Notably, the brightest spot 850 in the image 820 is located in a substantially similar location within the imaged channel 817 compared to the brightest spot 860 in the image 830, regardless of the differences in the physical locations of the light sources 103A, 103B. FIG. 8C shows a heatmap 840 indicative of the differences in the illumination patterns between the images 820 and 830 across the imaged channel 817, revealing that the differences are relatively low and consistent throughout the imaged channel 817. As described previously, these substantially similar illumination patterns of both LED light sources 103A, 103B enable more reliable analyte measurements since the images 820, 830 are directly comparable. As such, potentially complex algorithms to standardize the illumination across the images can be avoided and analytical errors due to illumination differences between LED light sources can be avoided.

Other options (e.g., optical fibers or mirrors) may also be used for combining light from multiple LEDs. However, the bent light pipe 804, which can be constructed from materials such as thermoplastics (e.g., polycarbonate, acrylic [PMMA], cyclic olefin polymers, such as Zeonex or Zeonor, for example Zeonex 480 (product code Z03812 of Sept. 27, 2019), Zeonex 5000 (product code Z05213 of Oct. 2, 2019), or Zeonor 1060R (product code Z02812 of Sept. 27, 2019), polymethylmethyacrylimide [PMMI]), glass, or silicone resin, resulting in the advantage of having much lower cost. This can enable the illumination module (e.g., illumination module 105 or illumination module 805) to be combined with the container 115 and the imaging module 125 in a single disposable test cartridge.

Moreover, in some implementations, the LEDs 103A, 103B can directly contact the surface of the bent light pipe 804, enabling the light pipe to collect and preserve more than 90% of LED light and preventing light loss for a long distance before the light hits the container 115. This result is made possible by total internal reflection within the bent light pipe 804 and makes
the illumination module 805 more efficient than the illumination module 705 with the traditional diffusor 710. This efficiency can in turn allow for the use low-brightness LED packages.

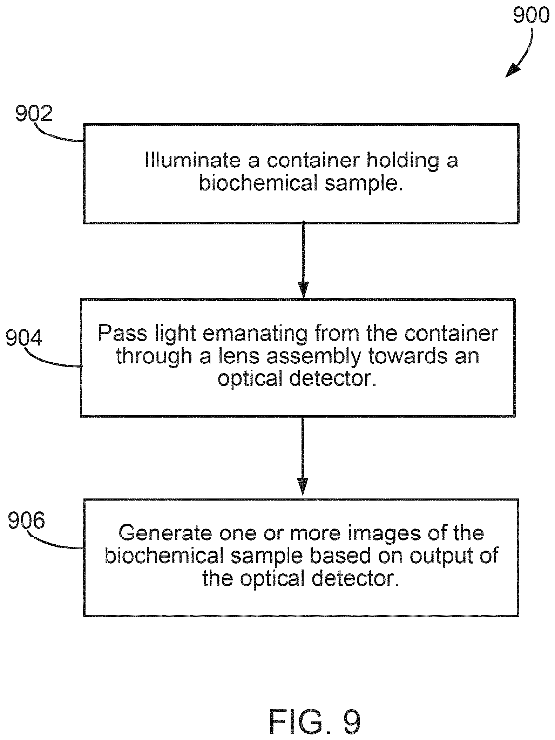

FIG. 9 illustrates an example process 900 for detecting analytes in a biochemical sample. For example, the process 900 can be used to measure hemolysis in a whole blood sample.

Operations of the process 900 can include illuminating a container holding the biochemical sample (902). For example, the container can be the container 115 of optical system 100 and can be a microfluidic flow cell, as described above. The biochemical sample can be a whole blood sample. The container can be illuminated using light from two or more LEDs, wherein the light is directed from the LEDs through a light pipe conduit, which may also be referred to as a light conduit, that includes a non-linear optical path supporting total internal reflection of light. For example, illuminating the container can include illuminating the container using light of a first color (e.g., red) emitted from a first subset of the two or more LEDs, and subsequently illuminating the container using light of a second color (e.g., yellow) emitted from a second subset of the two or more LEDs. In some implementations, the light pipe conduit, which may also be referred to as the light conduit, can be a bent light pipe such as the bent light pipe 804.

Operations of the process 900 also include passing light emanating from the container through a lens assembly towards an optical detector (904). The lens assembly can be configured to converge the light emanating from the container through an aperture disposed between the lens assembly and the optical detector. For example, referring to FIG. 1, the lens assembly can be the lens 114, the aperture can be the optical aperture 118, and the optical detector can be the optical detector 108 of the optical system 100.

Operations of the process 900 also include generating one or more images of the biochemical sample based on output of the optical detector (906). For example, the optical detector can be a camera, and the output of the camera can be one or more images taken of a whole blood sample within the container 115 of the optical system 100.

Optionally, operations of the process 900 can further include separating the biochemical sample in the container. The operations of the process 900 can also include delivering acoustic energy to the container prior to or during illuminating the container. For example, the acoustic energy can be delivered to the container in order to separate the biochemical sample in the container. The operations of the process 900 can also include processing the one or more images
to detect the analytes in the biochemical sample. For example, the one or more images can be processed to measure hemolysis in the blood sample.

## Claims

1. A system (100; 400) for detecting analytes in a biochemical sample, the system (100; 400) comprising:
a container (115; 415) configured to contain the biochemical sample;
a light source (103A, 103B);
an optical detector (108);
a telecentric lens (114) disposed between the container (115; 415) and the optical detector (108);
an optical aperture (118) disposed between the lens (114) and the optical detector (108);
a single structure (116; 516) configured to house, and substantially fix relative to one another, the container (115; 415), the optical aperture (118), the lens (114), and the optical detector (108); and
a curved light pipe conduit (104) between the light source (103A, 103B) and the container (115; 415).

2. The system (100; 400) of claim 1, wherein the container (115; 415) comprises a channel (117) configured to hold the biochemical sample, the channel (117) configured to pass at least a portion of light received from the light source (103A, 103B) to the optical detector (108).

3. The system (100; 400) of claim 1 or 2, wherein the system (100; 400) is configured to capture telecentric imagery.

4. The system (100; 400) of any one of the claims 1 to 3, wherein the optical aperture (118) is defined by a geometry of the structure (116; 516), and/or
wherein the light source (103A, 103B) comprises two or more LEDs (103A, 103B) of different colors.

5. The system (100; 400) of any one of the claims 1 to 4, wherein the light conduit (104) supports total internal reflection of light received from the light source (103A, 103B) at a first end of the light conduit (104) and delivers reflected light to the container (115; 415) at a second end of the light conduit (104), and/or
wherein the light conduit (104) comprises a plastic light pipe or a glass light pipe.

6. The system (100; 400) of any one of the claims 1 to 5, the structure (116; 516) comprising:
a first receptacle (550) configured to receive the optical detector (108);
a second receptacle (552) configured to receive a lens assembly including the telecentric lens (114); and
the optical aperture (118) disposed between the first receptacle (550) and the second receptacle (552), the optical aperture (118) configured to pass light from the lens assembly on to the optical detector (108),
wherein the first receptacle (550), the second receptacle (552), and the optical aperture (118) are portions of the structure (116; 516).

7. The system (100; 400) of claim 6, further comprising a third receptacle (554) configured to hold a container (115; 415) of a sample for the optical analyte detection system (100; 400), wherein the third receptacle (554) is a portion of the structure (116; 516).

8. The system (100; 400) of claim 7, wherein the container (115; 415) is a flow cell and wherein the structure (116; 516) physically contacts the flow cell without any intermediate components being disposed between the flow cell and the structure (116; 516), or
wherein the container (115; 415) comprises a flow cell and one or more intermediate components, and wherein the structure (116; 516) physically contacts the one or more intermediate components.

9. The system (100; 400) of claim 7 or 8, wherein the container (115; 415) comprises a channel (117) configured to hold the sample, and the container (115; 415) is disposed such that the channel (117) passes received light towards the second receptacle (552) of the imaging apparatus.

10. The system (100; 400) of any one of the claims 7 to 9, wherein the sample is a blood sample.

11. The system of any one of the claims 1 to 10, wherein the structure (116; 516) is injection molded.

12. A method for detecting analytes in a biochemical sample by using the system according to claims 1 to 11, the method comprising:
illuminating the container (115; 415) holding the biochemical sample using light from two or more light-emitting diodes (LEDs), wherein the light is directed from the LEDs (103A, 103B) to the container (115; 415) through a curved light pipe conduit (104) supporting total internal reflection of light;
passing the light emanating from the container (115; 415) through the lens assembly towards the optical detector (108), wherein the lens assembly includes a telecentric lens (114) and is configured to converge the light emanating from the container (115; 415) through an aperture (118) disposed between the lens assembly and the optical detector (108), wherein the container (115; 415), the aperture (118), the lens assembly and the optical detector (108) are housed and substantially fixed relative to one another by a single structure (116; 516); and
generating one or more images of the biochemical sample based on output of the optical detector (108).

13. The method of claim 12, wherein illuminating the container (115; 415) comprises:
illuminating the container (115; 415) using light of a first color emitted from a first subset of the two or more LEDs (103A, 103B); and
subsequently illuminating the container (115; 415) using light of a second color emitted from a second subset of the two or more LEDs (103A, 103B).

14. The method of claim 12 or 13, further comprising separating the biochemical sample in the container (115; 415), and/or
further comprising delivering acoustic energy to the container (115; 415) prior to or during illuminating the container (115; 415), and/or
further comprising processing the one or more images to detect the analytes in the biochemical sample.

## Patentansprüche

1. System (100; 400) zum Detektieren von Analyten in einer biochemischen Probe, wobei das System (100; 400) umfasst:
einen Behälter (115; 415), der dazu eingerichtet ist, die biochemische Probe zu enthalten;
eine Lichtquelle (103A, 103B);
einen optischen Detektor (108);
eine telezentrische Linse (114), die zwischen dem Behälter (115; 415) und dem optischen Detektor (108) angeordnet ist;
eine optische Apertur (118), die zwischen der Linse (114) und dem optischen Detektor (108) angeordnet ist;
eine einzige Struktur (116; 516), die dazu eingerichtet ist, den Behälter (115; 415), die optische Apertur (118), die Linse (114) und den optischen Detektor (108) aufzunehmen und im Wesentlichen relativ zueinander zu fixieren; und
einen gekrümmten Lichtleitkanal (104) zwischen der Lichtquelle (103A, 103B) und dem Behälter (115; 415).

2. System (100; 400) nach Anspruch 1, wobei der Behälter (115; 415) einen Kanal (117) umfasst, der dazu eingerichtet ist, die biochemische Probe zu halten, wobei der Kanal (117) dazu eingerichtet ist, mindestens einen Teil des von der Lichtquelle (103A, 103B) empfangenen Lichts zu dem optischen Detektor (108) durchzulassen.

3. System (100; 400) nach Anspruch 1 oder 2, wobei das System (100; 400) dazu eingerichtet ist, telezentrisches Bildmaterial zu erfassen.

4. System (100; 400) nach einem der Ansprüche 1 bis 3, wobei die optische Apertur (118) durch eine Geometrie der Struktur (116; 516) definiert ist, und/oder
wobei die Lichtquelle (103A, 103B) zwei oder mehr LEDs (103A, 103B) unterschiedlicher Farben umfasst.

5. System (100; 400) nach einem der Ansprüche 1 bis 4, wobei der Lichtleitkanal (104) die innere Totalreflexion von Licht, das von der Lichtquelle (103A, 103B) an einem ersten Ende des Lichtleitkanals (104) empfangen wird, unterstützt und dem Behälter (115; 415) an einem zweiten Ende des Lichtleitkanals (104) reflektiertes Licht zuführt, und/oder
wobei der Lichtleitkanal (104) einen Lichtleiter aus Kunststoff oder einen Lichtleiter aus Glas umfasst.

6. System (100; 400) nach einem der Ansprüche 1 bis 5, wobei die Struktur (116; 516) Folgendes umfasst:
eine erste Aufnahme (550), die dazu eingerichtet ist, den optischen Detektor (108) aufzunehmen;
eine zweite Aufnahme (552), die dazu eingerichtet ist, eine Linsenanordnung aufzunehmen, welche die telezentrische Linse (114) einschließt; und
die optische Apertur (118), die zwischen der ersten Aufnahme (550) und der zweiten Aufnahme (552) angeordnet ist, wobei die optische Apertur (118) dazu eingerichtet ist, Licht von der Linsenanordnung zu dem optischen Detektor (108) durchzulassen,
wobei die erste Aufnahme (550), die zweite Aufnahme (552) und die optische Apertur (118) Teile der Struktur (116; 516) sind.

7. System (100; 400) nach Anspruch 6, ferner umfassend eine dritte Aufnahme (554), die dazu eingerichtet ist, einen Behälter (115; 415) einer Probe für das optische Analytendetektionssystem (100; 400) zu halten, wobei die dritte Aufnahme (554) ein Teil der Struktur (116; 516) ist.

8. System (100; 400) nach Anspruch 7, wobei der Behälter (115; 415) eine Durchflusszelle ist und wobei die Struktur (116; 516) die Durchflusszelle physisch berührt, ohne dass irgendwelche Zwischenkomponenten zwischen der Durchflusszelle und der Struktur (116; 516) angeordnet sind, oder
wobei der Behälter (115; 415) eine Durchflusszelle und eine oder mehrere Zwischenkomponenten umfasst und wobei die Struktur (116; 516) die eine oder die mehreren Zwischenkomponenten physisch berührt.

9. System (100; 400) nach Anspruch 7 oder 8, wobei der Behälter (115; 415) einen Kanal (117) umfasst, der dazu eingerichtet ist, die Probe zu halten, und der Behälter (115; 415) so angeordnet ist, dass der Kanal (117) empfangenes Licht in Richtung der zweiten Aufnahme (552) der Bildgebungsvorrichtung durchlässt.

10. System (100; 400) nach einem der Ansprüche 7 bis 9, wobei die Probe eine Blutprobe ist.

11. System nach einem der Ansprüche 1 bis 10, wobei die Struktur (116; 516) spritzgegossen ist.

12. Verfahren zum Detektieren von Analyten in einer biochemischen Probe unter Verwendung des Systems nach den Ansprüchen 1 bis 11, wobei das Verfahren Folgendes umfasst:
das Beleuchten des Behälters (115; 415), der die biochemische Probe hält, unter Verwendung von Licht von zwei oder mehr lichtemittierenden Dioden (LEDs), wobei das Licht von den LEDs (103A, 103B) durch einen gekrümmten Lichtleitkanal (104), der die innere Totalreflexion von Licht unterstützt, zu dem Behälter (115; 415) gerichtet wird;
das Durchleiten des von dem Behälter (115; 415) ausgehenden Lichts durch die Linsenanordnung in Richtung des optischen Detektors (108), wobei die Linsenanordnung eine telezentrische Linse (114) einschließt und dazu eingerichtet ist, das von dem Behälter (115; 415) ausgehende Licht durch eine Apertur (118), die zwischen der Linsenanordnung und dem optischen Detektor (108) angeordnet ist, hindurch zu bündeln, wobei der Behälter (115; 415), die Apertur (118), die Linsenanordnung und der optische Detektor (108) von einer einzigen Struktur (116; 516) aufgenommen und im Wesentlichen relativ zueinander fixiert sind; und
das Erzeugen eines oder mehrerer Bilder der biochemischen Probe auf Grundlage der Ausgabe des optischen Detektors (108).

13. Verfahren nach Anspruch 12, wobei das Beleuchten des Behälters (115; 415) Folgendes umfasst:
das Beleuchten des Behälters (115; 415) unter Verwendung von Licht einer ersten Farbe, das von einer ersten Teilmenge der zwei oder mehr LEDs (103A, 103B) emittiert wird; und
das anschließende Beleuchten des Behälters (115; 415) unter Verwendung von Licht einer zweiten Farbe, das von einer zweiten Teilmenge der zwei oder mehr LEDs (103A, 103B) emittiert wird.

14. Verfahren nach Anspruch 12 oder 13, ferner umfassend das Trennen der biochemischen Probe in dem Behälter (115; 415), und/oder
ferner umfassend das Zuführen akustischer Energie zu dem Behälter (115; 415) vor oder während des Beleuchtens des Behälters (115; 415), und/oder
ferner umfassend das Verarbeiten des einen Bildes oder der mehreren Bilder, um die Analyten in der biochemischen Probe zu detektieren.

## Revendications

1. Système (100; 400) pour détecter des analytes dans un échantillon biochimique, le système (100; 400) comprenant :
un récipient (115; 415) configuré pour contenir l'échantillon biochimique ;
une source lumineuse (103A, 103B) ;
un détecteur optique (108) ;
une lentille télécentrique (114) disposée entre le récipient (115; 415) et le détecteur optique (108) ;
une ouverture optique (118) disposée entre la lentille (114) et le détecteur optique (108) ;
une seule structure (116; 516) configurée pour loger le récipient (115; 415), l'ouverture optique (118), la lentille (114) et le détecteur optique (108), et les fixer sensiblement les uns par rapport aux autres ; et
un conduit de guidage de lumière incurvé (104) entre la source lumineuse (103A, 103B) et le récipient (115; 415).

2. Système (100; 400) selon la revendication 1, dans lequel le récipient (115; 415) comprend un canal (117) configuré pour maintenir l'échantillon biochimique, le canal (117) étant configuré pour laisser passer au moins une partie de la lumière reçue de la source lumineuse (103A, 103B) vers le détecteur optique (108).

3. Système (100; 400) selon la revendication 1 ou 2, dans lequel le système (100; 400) est configuré pour capturer des images télécentriques.

4. Système (100; 400) selon l'une quelconque des revendications 1 à 3, dans lequel l'ouverture optique (118) est définie par une géométrie de la structure (116; 516), et/ou
dans lequel la source lumineuse (103A, 103B) comprend deux LED ou plus (103A, 103B) de couleurs différentes.

5. Système (100; 400) selon l'une quelconque des revendications 1 à 4, dans lequel le conduit de guidage de lumière (104) permet la réflexion totale interne de la lumière reçue de la source lumineuse (103A, 103B) à une première extrémité du conduit de guidage de lumière (104) et fournit de la lumière réfléchie au récipient (115; 415) à une deuxième extrémité du conduit de guidage de lumière (104), et/ou
dans lequel le conduit de guidage de lumière (104) comprend un guide de lumière en matière plastique ou un guide de lumière en verre.

6. Système (100; 400) selon l'une quelconque des revendications 1 à 5, la structure (116; 516) comprenant :
un premier logement (550) configuré pour recevoir le détecteur optique (108) ;
un deuxième logement (552) configuré pour recevoir un ensemble de lentilles incluant la lentille télécentrique (114) ; et
l'ouverture optique (118) disposée entre le premier logement (550) et le deuxième logement (552), l'ouverture optique (118) étant configurée pour laisser passer la lumière provenant de l'ensemble de lentilles vers le détecteur optique (108),
dans lequel le premier logement (550), le deuxième logement (552) et l'ouverture optique (118) sont des parties de la structure (116; 516).

7. Système (100; 400) selon la revendication 6, comprenant en outre un troisième logement (554) configuré pour maintenir un récipient (115; 415) d'un échantillon pour le système optique de détection d'analytes (100; 400), dans lequel le troisième logement (554) est une partie de la structure (116; 516).

8. Système (100; 400) selon la revendication 7, dans lequel le récipient (115; 415) est une cellule d'écoulement et dans lequel la structure (116; 516) est physiquement en contact avec la cellule d'écoulement sans qu'aucun composant intermédiaire soit disposé entre la cellule d'écoulement et la structure (116; 516), ou
dans lequel le récipient (115; 415) comprend une cellule d'écoulement et un ou plusieurs composants intermédiaires, et dans lequel la structure (116; 516) est physiquement en contact avec le ou les composants intermédiaires.

9. Système (100; 400) selon la revendication 7 ou 8, dans lequel le récipient (115; 415) comprend un canal (117) configuré pour maintenir l'échantillon, et le récipient (115; 415) est disposé de telle sorte que le canal (117) laisse passer la lumière reçue vers le deuxième logement (552) de l'appareil d'imagerie.

10. Système (100; 400) selon l'une quelconque des revendications 7 à 9, dans lequel l'échantillon est un échantillon de sang.

11. Système selon l'une quelconque des revendications 1 à 10, dans lequel la structure (116; 516) est moulée par injection.

12. Procédé pour détecter des analytes dans un échantillon biochimique en utilisant le système selon les revendications 1 à 11, le procédé comprenant :
l'illumination du récipient (115; 415) maintenant l'échantillon biochimique à l'aide de lumière provenant de deux diodes électroluminescentes (LED) ou plus, dans lequel la lumière est dirigée des LED (103A, 103B) vers le récipient (115; 415) à travers un conduit de guidage de lumière incurvé (104) permettant la réflexion totale interne de la lumière ;
le passage de la lumière émanant du récipient (115; 415) à travers l'ensemble de lentilles vers le détecteur optique (108), dans lequel l'ensemble de lentilles inclut une lentille télécentrique (114) et est configuré pour faire converger la lumière émanant du récipient (115; 415) à travers une ouverture (118) disposée entre l'ensemble de lentilles et le détecteur optique (108), dans lequel le récipient (115; 415), l'ouverture (118), l'ensemble de lentilles et le détecteur optique (108) sont logés et sensiblement fixés les uns par rapport aux autres par une seule structure (116; 516) ; et
la génération d'une ou plusieurs images de l'échantillon biochimique sur la base de la sortie du détecteur optique (108).

13. Procédé selon la revendication 12, dans lequel l'illumination du récipient (115; 415) comprend :
l'illumination du récipient (115; 415) à l'aide de lumière d'une première couleur émise par un premier sous-ensemble des deux LED ou plus (103A, 103B) ; et
l'illumination ultérieure du récipient (115; 415) à l'aide de lumière d'une deuxième couleur émise par un deuxième sous-ensemble des deux LED ou plus (103A, 103B).

14. Procédé selon la revendication 12 ou 13, comprenant en outre la séparation de l'échantillon biochimique dans le récipient (115; 415), et/ou
comprenant en outre la fourniture d'énergie acoustique au récipient (115; 415) avant ou pendant l'illumination du récipient (115; 415), et/ou
comprenant en outre le traitement de la ou des images pour détecter les analytes dans l'échantillon biochimique.
